# EUROPEAN PATENT SPECIFICATION

(11) **EP 1 960 125 B1**
(45) Date of publication and mention of the grant of the patent: **29.02.2012**
(21) Application number: 06745348.0
(22) Date of filing: 16.05.2006
(51) Int. Cl.: B07C 5/36

(54) **METHOD AND APPARATUS FOR GRADING ARTICLES**
VERFAHREN UND VORRICHTUNG ZUR SORTIERUNG VON ARTIKELN
DISPOSITIF ET PROCEDE DE TRI D'ARTICLES

(30) Priority: 12.12.2005 IT BO20050753
(43) Date of publication of application: 27.08.2008
(73) Proprietor: S.A.M.M.O. S.p.A., 47023 Cesena (IT)
(72) Inventor: ZANELLI, Raffaele, I-47023 Cesena (IT); DI MAURO, Vittorio, I-47025 Mercato Saraceno (IT)
(74) Representative: di Francia, Vincenzo
(86) International application number: PCT/IT2006/000365
(87) International publication number: WO 2007/069284

(56) References cited:
- WO-A-2004/067417
- US-A- 5 244 100

## Description

### Technical field

The present invention relates to a method and an apparatus for grading articles, in particular fruit and vegetables.

### Background art

It is known that for grading fruits, vegetables and similar articles, such as for example apples or other fuits not ncessarily round-shaped, have been got ready automatic apparatuses able to grade the same articles according to suitable parameters relating to size, shape and weight.

These apparatuses generally comprise a conveyor line, usually constituted by a suitably motorized conveyor chain, along which are positioned in succession a plurality of supporting devices for the articles to grade. By means of these supporting devices the articles are conveyed from an entrance station to one or more unload stations usually defined by conveyor belts positioned transversally to the cited conveyor line. The articles conveyed by the cited supporting devices go in succession through a grading station where visual detectors act and through a weighing station.

According to a known solution the supporting devices are provided with an assembly for containing the articles, cup- or goblet-shaped, for receiving the single article and keeping it in the same position during the conveyance. But the apparatuses of this type are able to detect only partially the visual characteristics of the articles, because during the conveyance the articles are simply translated and so show themselves partially to the detectors.

A second type of known apparatuses disclosed for example in the European patent n° EP 0406284 comprises supporting devices provided with a roller assembly suited to cause the rolling of the articles positiond on adjacent rollers. Even though these apparatuses improve the visual detection of the articles characteristics thanks to the rolling action exerted by the rollers on the articles, the same apparatuses don' t enable any secure handling of the articles.

The apparatus disclosed in the US patent n. 5,244,100 enables to detect also the characteristics of the articles relating to their weight, in addition to the visible ones. In particular the apparatus comprises supporting devices provided with a roller assembly for rolling the articles and with a weighing cradle interposed between adjacent rollers, suited to go through a specially provided load cell in order to detect the weight of the articles. This apparatus as well doesn' t overcome the problem of handling the articles, as during the singularization and weighing phases the articles can fall accidentally.

The European patent EP 1599399 discloses a conveying device provided with a roller assembly for rolling the articles, suited to support each article singly. In particular this conveying device provides a carrier frame pivoted oscillating on a mounting assembly constrained to the conveying chain, associated to a roller rotating transversally, and a locking member mobile between a first position suited to lock the carrier frame in a carriage position for the articles and a second position to unlock the frame in a position for the bilateral unload of the articles. This device enables the article weighing by positioning the carrier frame at a specially provided load cell. Still the weighing operation can' t prove optimal because the detected measure is inevitably affected by the effects of the conveying chain connected to the carrier frame.

Finally it is worth noting that the known conveying devices are usually intended for the mounting above the conveying chain, in order to enable the unload of the articles on both sides of the chain. But in this way the articles are located in a rather high position with regard to the exit conveing belts, so during the unloading phase the vertical fall that the articles are induced to perform can bring on indesired damages.

### Disclosure of the invention

The aim of the present invention is to overcome the cited drawbacks, by devising a method and an apparatus for grading articles which enable to perform effectively the conveyance and the grading of the articles according to the visual characteristics and to the weight of the same articles.

Within this aim it is a further scope of the present invention to devise an apparatus which perfoms the article grading without damaging the articles.

A further aim of the present invention is to devise an apparatus for grading articles of simple structure, reliable function and versatile use.

The cited aims are achieved according to the present invention by the method for grading articles in apparatuses comprising a conveyor line developed along a substantially horizontal direction between an entrance station for the articles to grade and an unload station, and provided with a pulling assembly for a plurality of conveying devices for the articles, regularly spaced in positions adjacent one another and suited to take the same articles to suitable operational stations, characterized in that it comprises the steps of:
(a) supplying the articles to grade on a rollers supporting assembly, carried freely revolving by a support assembly of respective conveying devices positioned in adjacent positions;
(b) setting in rotation the rollers supporting assembly in order to cause the rotation of the articles at a visual detection station for the same articles;
(c) operating the descent of the rollers supporting assembly to a lowered position by means of an angular rotation around a first rotational axis transversal to the pulling assembly, so as to arrange single articles supported respectively by the rollers supporting assembly carried by the support assembly and by a support element defined by the support assembly itself, being the support element suited to cooperate with the rollers supporting assembly in order to form a handling unit for handling one single article;
(d) lifting the support element of the support assembly by means of an opposite angular rotation around a second rotational axis transversal to the pulling assembly, so as to cause the separation of the support assembly itself from the pulling assembly at a weighing station for weighing the articles;
(e) tipping over the support assembly around a rotational axis substantially longitudinal to the conveyor line, under the contrasting action of elastic means, from a load position to an unload position for unloading the articles, tipped over outwards on the opposite side of the pulling assembly.

### Brief description of the drawings

Description details of the invention shall be further evident in the illustrations of a preferred embodiment of the apparatus for grading articles, illustrated in the guideline drawings attached, wherein:

fig. 1 illustrates a side view of a couple of conveying devices of the claimed apparatus, positioned adjacent along the conveyor line of the articles to grade;

fig. 2 illustrates a corresponding plan view of the conveying devices;

fig. 3 and 4 illustrate the same side view of a conveying device at different operational steps;

fig. 5, 6 and 7 respectfully illustrate a front view of said conveying device at different operational steps;

fig. 8 illustrates an exploded view of the conveying device, in sectional view according to a transversal plane;

fig. 9 illustrates a side view of a detail of the conveying device in a succession of operational steps.

### Best mode for carrying out the invention

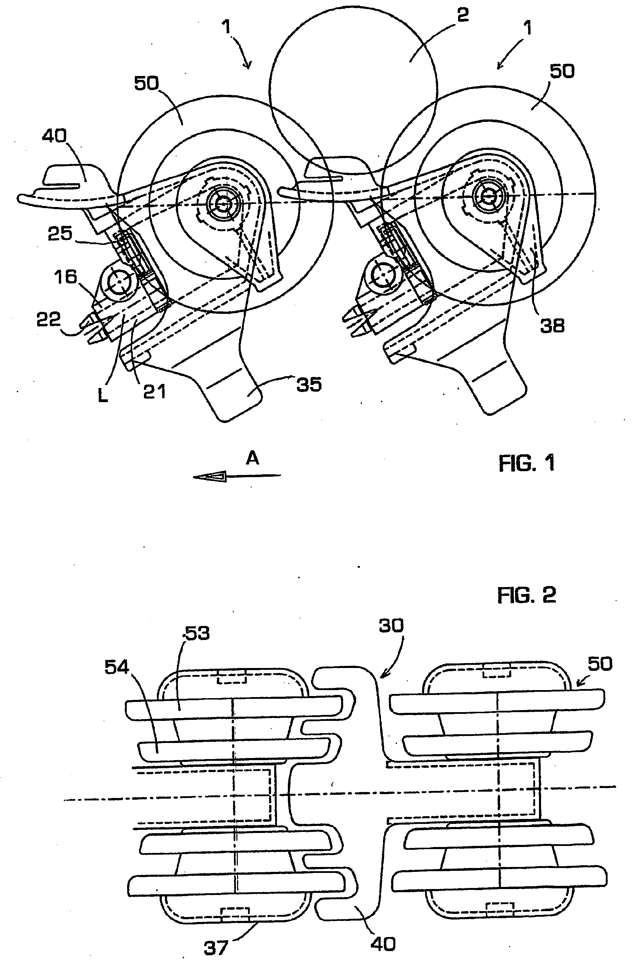

With reference to such figures 1 refers to a conveying device intended for use in an apparatus for grading articles 2, in particular fruits, vegetables and the like.

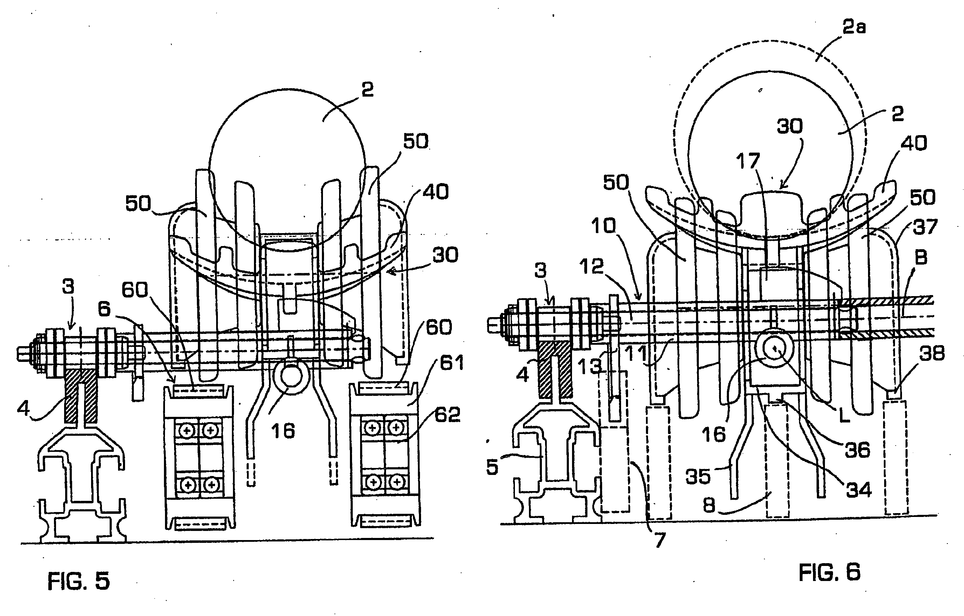

The apparatus for grading comprises a conveyor line for the articles 2 to grade, developed along a substantially horizontal direction between an entrance station for the articles 2 to grade and an unload station, in a known and therefore not illustrated way. This conveyor line is provided with a pulling assembly 3, usually of chain type, to which is constrained a plurality of the cited conveying devices 1 at regularly spaced reciprocally adjacent positions. The chain 3 is operated in continuous motion by suitable motor drives in the direction indicated by the arrow A, so as to take the articles 2 to specially provided operational stations of the apparatus, such as in particular a station for the singularization of the articles, a visual detection station and a weighing station. The chain 3 glides on a fixed longitudinal guide 4 fixed to the frame 5 of the apparatus (fig. 5).

Each conveying device 1 comprises a fastening assembly 10 suited to be carried on one side of the chain 3, angularly revolving around a first rotational axis B horizontally transversal to the conveyor line. The fastening assembly 10 shapes a sleeve 11 inside which is inverted revolving a stem 12 constrained by means of suitable screw elements to the chain 3 and intended to define the cited first rotational axis B of the conveying device 1.

According to a preferred embodiment of the invention the conveyor line of the apparatus provides a couple of chains 3 operated simultaneously along respective parallel guides 4 carrying at opposite positions corresponding conveying devices 1. Advantageously the sleeves 11 of one part of the cited opposite conveying devices 1 result extended by suitable tubular elements so as to substantially form a connecting element for the chains 3.

Next to an end of the sleeve 11 on the side turned to the chain 3 extends a tongue 13 having a substantially circular sector shape, lying on a vertical plane perpendicular to the axis of the sleeve 11 itself. On the tongue 13 is made a slot 14 shaped as an arc of circle concentric to the axis of the sleeve 11. The slot 14 is intended to be coupled with a pin 15 extending sideways to the chain 3, as it is described in detail later on.

Next to and below the opposite end of the sleeve 11 is shaped a tube 16 which defines a rotational axis L substantially longitudinal to the conveyor line. At the same end, above the sleeve 11, extends a shoulder 17 shaped as an arc of circle on a plane orthogonal to the cited longitudinal rotational axis L defined by the tube 16.

To the longitudinal tube 16 of the fastening assembly 10 is associated revolving a shank 21 shaped by an intermediary assembly 20 extending backwards to the fastening assembly 10 itself; according to the advance direction A. The shank 21 is axially kept inside the tube 16 by means of a ring 22 with spring lock.

The shank 21 extends form a substantially flat body 23 developed on a plane longitudinal to the axis of the longitudinal tube 16. At its back the body 23 shapes a further tube 24 which defines a second rotational axis C transversal to the conveyor line, positioned parallel to the cited first rotational axis B, at a rear position according to the advance direction A.

Around the shank 21 is wound a flexural spring 25 which is constrained at its ends respectively to a side of the shoulder 17 and a side of the body 23. As specified later on, the spring 25 is intended to function as a counter elastic element against the rotation of the device to an unload position tipped over outwards on the opposite side as to the pulling assembly.

Inside the transversal tube 24 is inserted a screw element 26 suited to serve as connection element with the support assembly 30, shaping on top a single article support element 40 defined by a sort of arch-shaped comb, and pivoted on the cited second transversal rotational axis C, so as to be revolving between a lifted position and a lowered position. The support assembly 30 is substantially constituted by a box-like shaped body 31 suited to receive internally the flat body 23 of the intermediary assembly 20. From the sides of the body 31 extend outwards respective tubular portions 32 suited to substantially constitute a bilateral extension of the transversal tube 24 and intended to receive the cited screw element 26 passing through. Furthermore from the sides of the body 31 extend bilaterally outwards respective tubular elements 33 coaxial and external to the tubular portions 32.

The lower portion of the body 31 extends frontally with a bracket 34 intended to serve as prop for the longitudinal tube 16 of the fastening assembly 10 during an operational step detailed later on. From the bracket 34 extends downwards a couple of symmetric side fins 35 suitably flared. Below the bracket 34 is furthermore shaped a tooth 36 on a longitudinal median plane.

On the tubular elements 33 of the support assembly 30 is fitted freely revolving around the second transversal rotational axis C a rollers supporting assembly 50 suited to cooperate with the support element 40 of the support assembly 30 itself in order to form a handling unit for a single article 2. The rollers 50 are constituted by an angular portion 51 fitted on a bush 52 coupled revolving to a respective tubular element 33, wherein from the cited annular portion 51 extends a couple of discs 53, 54 positioned side by side and having different external diameter. In particular the disc 54 turned inwards to the device has a smaller diameter than the disc 53 turned outwards has. Consequently the rims of the discs 53, 54 of the two rollers 50, suitably thickened and bevelled, cooperate to define a hollow profile intended to receive the article 2. To the tubular elements 33 of the support assembly 30 are fitted externally to the rollers 50 respective covering elements 37 shaping an appendage 38 extended radially substantially downwards. The covering elements 37 shape a cylindrical connection suited to be constrained rigidly inside the tubular element 33 by means of the screw element 26.

The method for grading articles 2 by means of the described apparatus provides for supplying the articles 2 to the conveying devices 1 set in motion to the entrance station by the pulling assembly 3 along the advance direction A. For example the articles 2 can be supplied in accumulation in known way on an inclined tray positioned above the conveyor line, so as to convey the articles 2 in succession to the cited entrance station.

At the entrance station the rollers 50 of the conveying devices 1 couple with longitudinal guides 6 suited to roll the rollers 50. The guides 6 can be usefully mobile in the advance direction A, so as to reduce the relative speed of the rollers 50 with regard to the guides 6 themselves and consequently to reduce the rotational speed of the rollers 50, thus securing the steadiness of the conveyed article 2 even in case the conveying devices 1 advance at high speed. In particular the guides 6 are made of flexible guiding elements 60 suitably motorized, for example of a belt wound around couples of wheels 61 operated in motion by specially provided motor drives by the interposition of rolling coupling elements 62 (fig. 5).

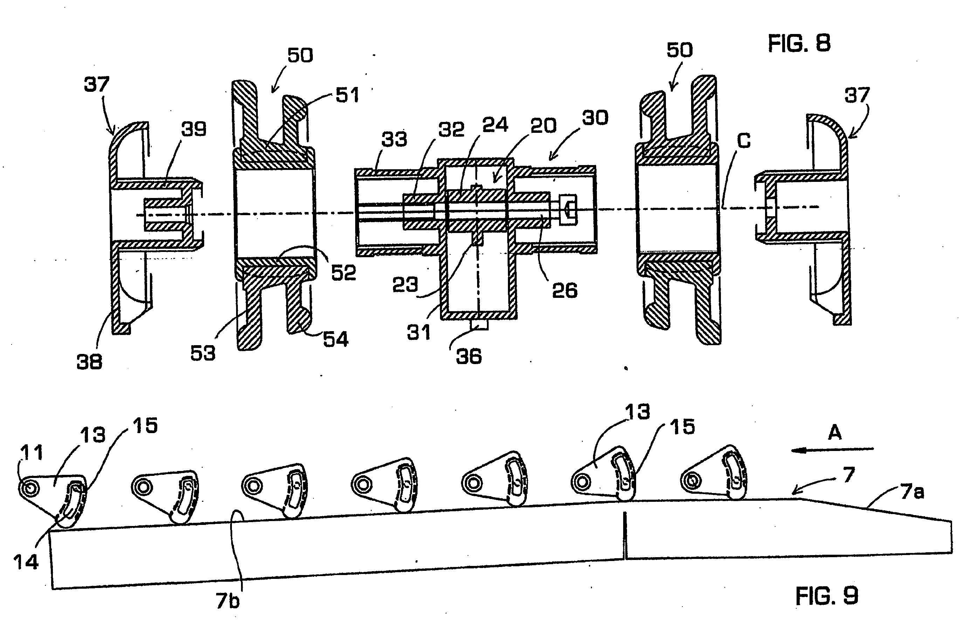

Furthermore at the entrance station the tongue 13 of the fastening assembly 10 couples with a longitudinal cam 7 positioned underneath. The longitudinal cam 7 shapes a stretch 7a having an inclined ascending profile in the advance direction A, as illustrated in fig. 9, so as to cause the gradual angular rotation of the entire device around the first rotational axis B and the consequent lifting of the rollers 50. This angular rotation stops when the pin 15 substantially arrives at the lower limit stop position inside the slot 14 made in the tongue 13.

When the articles 2 arrive at the end of the cited supplying tray, they are let fall to be readily received by the conveying devices 1 passing underneath. In particular each article 2 places itself on couples of rollers 50 belonging to adjacent conveying devices 1 (fig. 1). It is worth noting that at this operational phase the support elements 40 of the involved support assemblies 30 are positioned in lowered position as a consequence of the cited rotation of the device around the first rotational axis B. Owing to their comb-like shape the support elements 40 fit in without interference between the discs 53, 54 of the rollers 50 of the respective adjacent conveying device 1 positioned frontally with regard to the advance direction A (see fig. 2).

The rotational motion of the rollers 50 caused by the rolling on the longitudinal guides 6 brings on the rotation of the articles 2 supported between them, thus helping their singularization on the cited couples of adjacent conveying devices 1.

Subsequently the articles 2 conveyed by the conveying devices 1 arrive at the visual detection grading station. At this station is preferably provided a plurality of video cameras at opposite positions along the conveyor line, so as to observe the rotating articles 2 from more sides. The rotation of the articles 2 caused by the rollers 50 aids their thorough observation.

Downstream to the visual detection station the rollers 50 leave the rolling guides 6, so the cited rotation of the articles 2 ceases. At the same step the longitudinal cam 7 presents an inclined descending stretch 7b according to the advance direction A, so as to cause the angular rotation of the entire device around the first rotational axis B in a direction opposite to the previous one, causing the consequent lifting of the support elements 40 of the support assembly 30 and the lowering of the rollers 50. The slot 14 of the tongue 13 accomplishes an angular rotation downwards till it places itself with the pin 15 at the upper limit stop position (fig. 9).

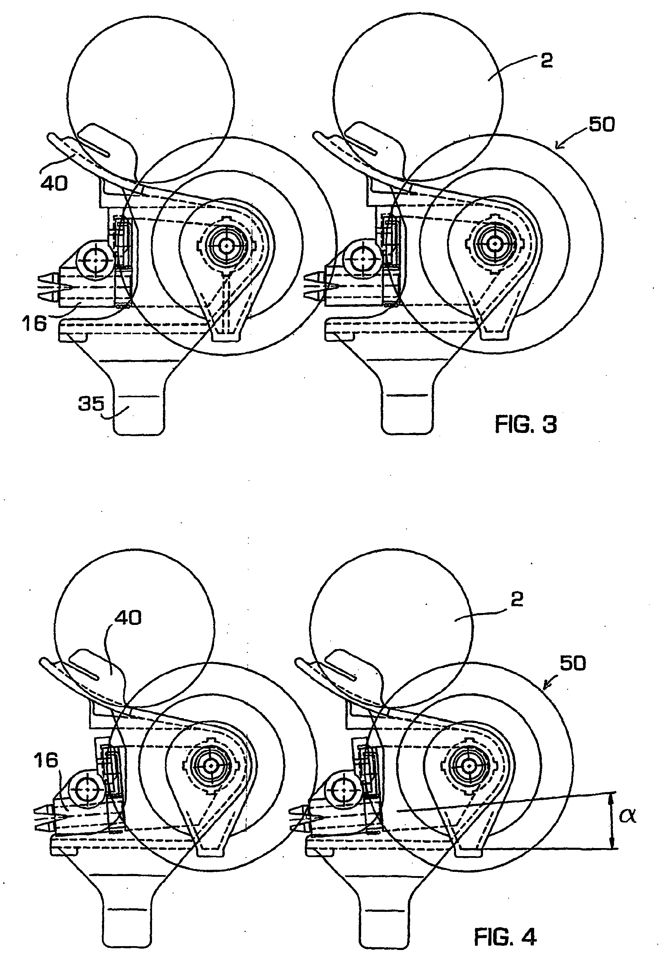

As a consequence of the cited rotation the support element 40 takes away the article 2 in a progressive way from being supported by the rollers 50 of the adjacent conveying device 1. At the end of the cited descending stretch of the longitudinal cam 7 the article 2 is steadily supported by the rollers 50 and by the support element 40 of a single conveying device 1 (fig. 3). It is worth noting that in this configuration the support element 40 is in contact with the shoulder 17 of the fastening assembly 10 connected to the chain 3 (fig. 6).

Furthermore it is worth noting that the rollers 50 uncouple from the longitudinal guides 6 before the intervention of the support element 40, so that the rollers 50 themselves have already stopped rolling when the article 2 comes into contact with the support element 40, thus avoiding any frictional actions which could damage the article itself.

During the subsequent step the articles 2 carried by the conveying devices 1 go through the weighing station which is preferably provided with a specially provided load cell. At the weighing station are provided sliding blocks 8 suited to be coupled in a sliding way with the support assembly 30 of the conveying device 1 passing through. In particular the sliding blocks 8 are simultaneously coupled with the appendages 38 of the covering elements 37 and with the tooth 36 shaped underneath the bracket 34 (fig. 6).

The sliding blocks 8 cause a rotation of the support assembly 30 around the second transversal rotational axis C in a direction opposite to the cited angular rotation around the first rotational axis B for the lowering of the rollers 50 by an angle α of limited amplitude, for example by 5°, thus lifting the support element 40 with regard to the shoulder 17 of the fastening assembly 10 (fig. 4). Consequently this rotation takes away the support assembly 30 from the support of the fastening assembly 10, thus making the weight measurement exempt from the effects of the chain 3 to which the fastening assembly 10 is connected revolving.

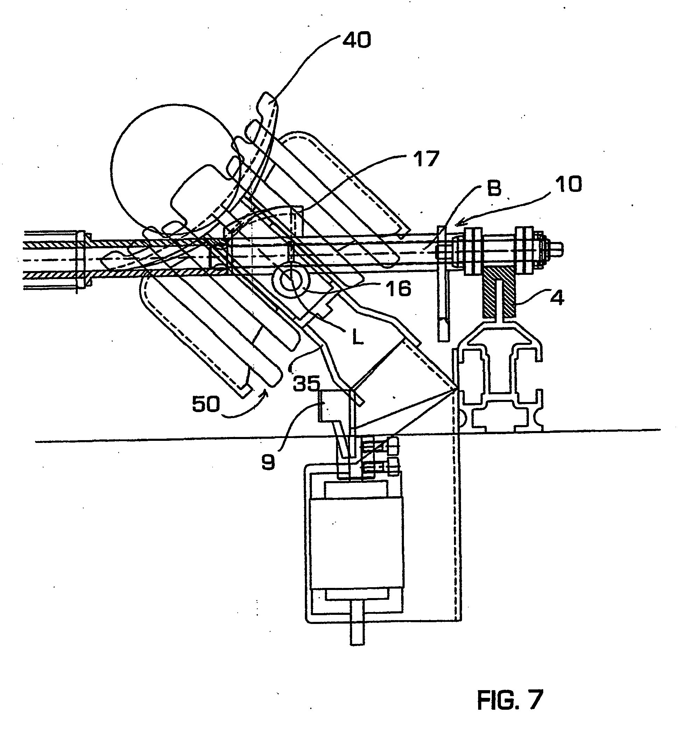

After the weighing step the articles 2 are graded by means of suitable data processing devices depending on the visual and weight characteristics. At the conveyor line is preferably provided a tipping cam 9 suited to receive from the cited data processing devices suitable signals to operate the selective tipping over of the conveying devices 1. The tipping cam 9 intercepts the selected conveying device 1 by the fin 35 so as to cause its angular rotation around the longitudinal rotational axis L, in practice by a 45° angle. (fig. 7). This tipping over induces the article 2 to fall from the conveying device 1 onto suitable unloading slipways suited to convey them to the successive working and packaging stations.

So the described method and apparatus reach the aim of operating in effective way the conveyance and grading of the articles depending on the visual and weight characteristics of the articles themselves. This aim is reached in particular thanks to the peculiar features of the structure and function of the conveying devices 1 which enable to take the single articles 2 through the successive stations of the apparatus.

It is worth noting that these conveying devices 1 define three different rotational axes for the elements intended to support the articles 2, in particular a first rotational axis B transversal to the conveyor line, a second transversal rotational axis C and a longitudinal rotational axis L. The combined rotation of the elements of each conveying device 1 with regard to the transversal rotational axes B and C enables to operate in properly timed relationship the lifting and the rotation of the articles 2 in order to perform the visual detection and to take these articles 2 to the weighing station without resting on the pulling assembly 3 of chain type. The latter condition secures a precise measurement of the weight of the articles 2.

A further prerogative of the invention is constituted by the fact that the conveying devices 1 are able to handle the articles 2 in a secure way, reducing the risk of causing any accidental damage of the same articles. In this connection it is worth noting that the positioning of the conveying devices 1 on one side of the chain 3 enables a remarkable reduction of the descent height during the unloading operational step of the articles 2.

Furthermore it is worth noting that the claimed apparatus prooves a great versatility of use, as the conveying devices 1 can be used for articles of different size and shape within a wide range, as indicated by way of example with the dotted line 2a in fig. 6a. This is due to the specific shape of the rollers 50 and of the support element 40 which cooperate to form a handling unit for a single article 2.

Finally the same conveying devices 1 can be fitted without distinction on either side of the chains 3 giving the user the widest possible choice.

Materials adopted for the actual realization of the invention, as well as their shapes and sizes, can be various, depending on the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Method for grading articles in apparatuses comprising a conveyor line developped along a substantially horizontal direction between an entrance station for the articles (2) to grade and an unload station, and provided with a pulling assembly (3) for a plurality of conveying devices (1) for the articles (2), regularly spaced in positions adjacent one another and suited to take the same articles (2) to suitable operational stations, **characterized in that** it comprises the steps of:
(a) supplying the articles (2) to grade on a rollers supporting assembly (50), carried freely revolving by a support assembly (30) of respective conveying devices (1) positioned at adjacent positions;
(b) setting in rotation the rollers supporting assembly (50) in order to cause the rotation of the articles (2) at a visual detection station for the same articles (2);
(c) operating the descent of the rollers supporting assembly (50) to a lowered position by means of an angular rotation around a first rotational axis (B) transversal to the pulling assembly (3), so as to arrange single articles (2) supported respectively by the rollers supporting assembly (50) carried by the support assembly (30) and by a support element (40) defined by the support assembly (30) itself, suited to cooperate with the rollers supporting assembly (50) in order to form a handling unit for handling one single article (2);
(d) lifting the support element (40) of the support assembly (30) by means of an opposite angular rotation around a second rotational axis (C) transversal to the pulling assembly (3), so as to cause the separation of the support assembly (30) itself from the pulling assembly (3) at a weighing station for weighing the articles (2);
(e) tipping over the support assembly (30) around a rotational axis (L) substantially longitudinal to the conveyor line, upon the contrasting action of elastic means (25), from a load position to an unload position for unloading the articles (2), tipped over outwards on the opposite side of the pulling assembly (3).

2. Method according to claim 1, **characterized in that** it provides for stopping the rotation of the rollers supporting assembly (50) before operating the descent of the rollers supporting assembly (50) itself to the lowered position, so as to avoid any frictional actions for the single articles (2) against the support element (40) of the support assembly (30).

3. Method according to claim 1, **characterized in that** it provides for setting in rotation the rollers supporting assembly (50) by the coupling with longitudinal guides (6) mobile in the advance direction (A), so as to reduce the relative speed of the rollers supporting assembly (50) with regard to the guides (6) themselves and consequently the rotational speed of the rollers supporting assembly (50) in order to secure the steadiness of the articles (2).

4. Method according to claim 1, **characterized in that** it provides for operating the descent of the rollers supporting assembly (50) to the lowered position by the angular rotation of a fastening assembly (10) of the conveying devices (1), angularly revolving around the first rotational axis (B), caused by the coupling with a longitudinal cam (7) positioned underneath.

5. Method according to claim 1, **characterized in that** it provides for lifting the support element (40) of the support assembly (30) at the weighing station for weighing the article (2) by means of an angular rotation ot the support assembly (30) around the second transversal rotational axis (C), in a direction opposite to the angular rotation around the first transversal rotational axis (B), being the cited opposite angular rotation caused by the coupling with sliding blocks (8) positioned underneath.

6. Method according to claim 5, **characterized in that** it provides for operating the angular rotation of the support assembly (30) by an angle (α) having reduced amplitude, for example by 5°.

7. Method according to claim 1, **characterized in that** it provides for tipping over the support assembly (30) in the unload position for unloading the article (2) by means of the selective coupling with a tipping cam (9) subjected to the control of a data processing device for processing the measurements accomplished on the articles (2) themselves.

8. Apparatus for grading articles, of the type comprising a conveyor line developed along a substantially horizontal direction between an entrance station for the articles (2) to grade and an unload station, and provided with a pulling assembly (3) for a plurality of conveying devices (1) for conveying the articles (2), regularly spaced at reciprocally adjacent positions and suited to take the articles (2) to suitable operational stations, **characterized in that** each conveying device (1) comprises a fastening assembly (10) suited to be carried on one side of the pullying assembly (3), angularly revolving around a first rotational axis (B) transversal to the conveyor line, and defining a rotational axis (L) substantially longitudinal to the conveyor line; an intermediary assembly (20) associated in a revolving way to the fastening assembly (10) according to the longitudinal rotational axis (L) and defining a second rotational axis (C) transversal to the conveyor line, being the second rotational axis (C) positioned parallel to the first rotational axis (B) at a rear position with regard to the advance direction (A); a support assembly (30) shaping a support element (40) for supporting a single article (2), pivoted on the second transversal rotational axis (C), so as to be revolving between a lifted position and a lowered position, and fitted oscillating around the longitudinal rotational axis (L) under the contrasting action of elastic means (25) between a load position for loading the single article (2) and an unload position tipped over outwards on the side opposite to the pulling assembly (3); a rollers supporting assembly (50) with rollers fitted freely revolving around the second transversal rotating axis (C), bilaterally to the support assembly (30) and suited to cooperate with the support element (40) of the support assembly (30) in order to form a handling unit for a single article (2).

9. Apparatus according to claim 8, **characterized in that** the fastening assembly (10) shapes a sleeve (11) in which is inserted revolving a stem (12) constrained to the pulling assembly (3), intended to define the first transversal rotational axis (B), and a tube (16) substantially orthogonal to the sleeve (11) which is suited to define the longitudinal rotational axis (L).

10. Apparatus according to the claim 9, **characterized in that** from the sleeve (11) extends a a tongue (13) having a substantially circular sector shape, on a vertical plane perpendicular to the axis of the sleeve (11), and suited to couple with a longitudinal cam (7) underneath in order to control the descent of the rollers supporting assembly (50) to the lowered position by means of an angular rotation of the fastening assembly (10).

11. Apparatus according to claim 10, **characterized in that** the longitudinal cam (7) shapes a stretch (7b) at least with a descending inclined profile according to the advance direction (A), suited to cause the angular rotation of the conveying devices (1) around the first rotational axis (B) in order to cause the lifting of the support element (40) of the support assembly (30) as well as the lowering of the rollers supporting assembly (50).

12. Apparatus according to claim 10, **characterized in that** on the tongue 13 is made a slot (14) shaped as an arc of circle concentric to the axis of the sleeve (11) and intended to couple with a pin (15) which extends laterally to the pulling assembly (3).

13. Apparatus according to claim 9, **characterized in that** above the sleeve (11) extends a shoulder (17) shaped as an arc of circle on a plane orthogonal to the cited longitudinal rotational axis (L), suited to serve as a lower limit stop for the support element (40).

14. Apparatus according to claim 9, **characterized in that** to the tube (16) of the fastening assembly (10) is associated revolving a shank (21) shaped by the intermediary assembly (20), extending the cited shank (21) from a body (23) shaping backwards a further tube (24) suited to define the second transversal rotational axis (C).

15. Apparatus according to claim 8, **characterized in that** the support assembly (30) is constituted by a substantially box-like shaped body (31) suited to receive internally the intermediary assembly (20) and shaping at top the support element (40), at an advanced position with regard to the advance direction (A), wherein bilaterally from both sides of the body (31) on the second transversal rotational axis (C) extend outwards respective coaxial tubular elements (33), on which the rollers supporting assembly (50) is intended to be fitted freely revolving.

16. Apparatus according to claim 15, **characterized in that** a lower portion of the body (31) of the support assembly (30) extends frontally with a bracket (34) intended to serve as an end stop for the fastening assembly (10) during a rotational step of the support assembly (30) around the second transversal rotational axis (C) at a weighing station for weighing the articles (2).

17. Apparatus according to claim 8, **characterized in that** from the support assembly (30) extend downwards appendages (36, 38) suited to couple in a sliding way at a weighing station for weighing the articles (2) sliding blocs (8) positioned underneath, suitable for causing an angular rotation af the support assembly (30) itself around the second transversal rotational axis (C) in order to lift the support element (40) of the support assembly (30) with regard to the fastening assembly (10).

18. Apparatus according to claim 8, **characterized in that** the support element (40) is defined by a sort of arch-shaped comb, so as to insert without interference between the rollers supporting assembly (50) of the adjacent conveying device (1) positioned frontally according to the advance direction (A) at the lowered position of the support assembly (30).

19. Apparatus according to claim 8, **characterized in that** the rollers supporting assembly (50) couples with longitudinal guides (6) positioned underneath, suited to roll the rollers supporting assembly (50) itself at the entrance station at least.

20. Apparatus according to claim 19, **characterized in that** the longitudinal guides (6) are consituted by flexible guiding elements (60) suitably motorized according to the advance direction (A) so as to reduce the relative speed of the rollers supporting assembly (50) with regard to the guides (6).

## Patentansprüche

1. Verfahren zum Klassifizieren von Artikeln in Einrichtungen, die eine Förderanlage umfassen, die sich in einer im Wesentlichen waagrechten Richtung zwischen einer Einlaufstation für die zu klassifizierenden Artikel (2) und einer Entladestation entwickelt und über Antriebsmittel (3) für eine Vielzahl von Vorrichtungen (1) zum Fördern dieser Artikel (2) verfügt, die regelmäßig beabstandet in aneinander angrenzenden Positionen angeordnet und geeignet sind, die Artikel (2) zu geeigneten Arbeitsstationen zu führen, **dadurch gekennzeichnet, dass** es die folgenden Phasen umfasst:
(a). Zuführen der zu klassifizierenden Artikel (2) auf Stützmitteln (50) mit Rollen, die frei drehbar von Tragmitteln (30) jeweiliger in benachbarten Positionen angeordneter Fördervorrichtungen (1) getragen werden;
(b). Versetzen der Stützmittel (50) mit Rollen in Drehung, um die Drehung der Artikel (2) auf Höhe einer Station für die visuelle Erfassung dieser Artikel (2) zu bewirken;
(c). Steuern des Abwärtshubs der Stützmittel (50) mit Rollen in eine abgesenkte Stellung durch eine Winkeldrehung um eine quer zu den Antriebsmitteln (3) verlaufende erste Drehachse (B), um einzelne Artikel (2) jeweils auf den von den Tragmitteln (30) getragenen Stützmitteln (50) mit Rollen und auf einem durch die Tragmittel (30) selbst definierten Auflageelement (40) in Auflage zu bringen, das imstande ist, mit den Stützmitteln (50) mit Rollen zusammenzuarbeiten, um eine Einheit für die Handhabung eines einzelnen Artikels (2) zu bilden;
(d). Anheben des Auflageelements (40) der Tragmittel (30) durch eine entgegengesetzte Winkeldrehung um eine quer zu den Antriebsmitteln (3) verlaufende zweite Drehachse (C), um das Lösen der Tragmittel (30) von den Antriebsmitteln (3) auf Höhe einer Station zum Wiegen der Artikel (2) zu bewirken;
(e). Kippen der Tragmittel (30) gegen den Widerstand elastischer Mittel (25) um eine im Wesentlichen längs zur Förderanlage verlaufende Drehachse (L) aus einer Ladestellung in eine auf der den Antriebsmitteln (3) entgegengesetzten Seite nach außen gekippte Stellung zum Entladen der Artikel (2).

2. Verfahren nach Anspruch 1, **dadurch gekennzeichnet, dass** es vorsieht, die Drehung der Stützmittel (50) mit Rollen zu unterbrechen, bevor der Abwärtshub der Stützmittel (50) mit Rollen in die abgesenkte Stellung gesteuert wird, um Schleifwirkungen der einzelnen Artikel (2) zu verhindern, die jeweils in Auflage auf die Stützmittel (50) mit Rollen gegen das Auflageelement (40) der Tragmittel (30) gebracht werden.

3. Verfahren nach Anspruch 1, **dadurch gekennzeichnet, dass** es vorsieht, die Stützmittel (50) mit Rollen durch den Eingriff mit in der Vorschubrichtung A beweglichen längslaufenden Führungen (6) in Drehung zu versetzen, um die relative Geschwindigkeit der Stützmittel (50) mit Rollen gegenüber den Führungen (6) und folglich die Drehgeschwindigkeit der Stützmittel (50) mit Rollen zu verringern, um so die Stabilität der Artikel (2) zu garantieren.

4. Verfahren nach Anspruch 1, **dadurch gekennzeichnet, dass** es vorsieht, den Abwärtshub der Stützmittel (50) mit Rollen in die abgesenkte Stellung durch eine Winkeldrehung von um die erste Drehachse (B) winklig drehbaren Anschlussmitteln (10) der Fördervorrichtungen (1) zu steuern, die durch den Eingriff mit einem darunter befindlichen längslaufenden Nocken (7) bedingt wird.

5. Verfahren nach Anspruch 1, **dadurch gekennzeichnet, dass** es vorsieht, das Auflageelement (40) der Tragmittel (30) auf Höhe der Station zum Wiegen der Artikel (2) durch eine der Richtung der Winkeldrehung um die erste querlaufende Drehachse (B) entgegengesetzte Winkeldrehung der Tragmittel (30) um die zweite querlaufende Drehachse (C) anzuheben, die durch den Eingriff mit darunter befindlichen Gleitschuhen (8) bedingt wird.

6. Verfahren nach Anspruch 5, **dadurch gekennzeichnet, dass** es vorsieht, die Winkeldrehung der Tragmittel (30) um einen Winkel (α) mit einer begrenzten Weite zu bewirken und zwar beispielsweise um 5°.

7. Verfahren nach Anspruch 1, **dadurch gekennzeichnet, dass** es vorsieht, die Tragmittel (30) durch den selektiven Eingriff mit einem Kippnocken (9) in die Stellung zum Entladen der Artikel (2) zu kippen, welcher der Steuerung durch Mittel zum Verarbeiten der an den Artikeln (2) vorgenommenen Messungen unterstellt ist.

8. Einrichtung zum Klassifizieren von Artikeln, die eine Förderanlage umfasst, die sich in einer im Wesentlichen waagrechten Richtung zwischen einer Einlaufstation für die zu klassifizierenden Artikel (2) und einer Entladestation entwickelt und über Antriebsmittel (3) für eine Vielzahl von Vorrichtungen (1) zum Fördern dieser Artikel (2) verfügt, die regelmäßig beabstandet in aneinander angrenzenden Positionen angeordnet und geeignet sind, die Artikel (2) zu geeigneten Arbeitsstationen zu führen, **dadurch gekennzeichnet, dass** jede dieser Fördervorrichtungen (1) Anschlussmittel (10) umfasst, die auf eine Seite der Antriebsmittel (3) gebracht werden können, die um eine quer zur Förderanlage verlaufende erste Drehachse (B) winklig drehbar sind und die eine im Wesentlichen längs zur Förderanlage verlaufende Drehachse (L) definieren; verbindende Mittel (20), die um die zweite längslaufende Drehachse (L) drehbar mit den Anschlussmitteln (10) verbunden sind und eine quer zur Förderanlage verlaufende zweite Drehachse (C) definieren, die in einer gegenüber der Vorschubrichtung (A) nach hinten versetzten Position parallel zur ersten Drehachse (B) angeordnet ist; Tragmittel (30), die ein Auflageelement (40) für einen einzelnen Artikel (2) bilden, an die zweite querlaufende Drehachse (C) derart angelenkt sind, dass sie zwischen einer angehobenen Stellung und einer abgesenkten Stellung drehbar sind, und zwischen einer Stellung zum Laden des einzelnen Artikels (2) und einer auf der den Antriebsmitteln (3) entgegengesetzten Seite nach außen gekippten Entladestellung gegen den Widerstand elastischer Mittel (25) schwingend auf die längslaufende Drehachse (L) montiert sind; Stützmittel (50) mit Rollen, die auf Höhe der zweiten querlaufenden Drehachse (C) frei drehbar beidseitig auf die Tragmittel (30) montiert und geeignet sind, mit dem Auflageelement (40) der Tragmittel (30) zusammenzuarbeiten, um eine Einheit für die Handhabung eines einzelnen Artikels (2) zu bilden.

9. Einrichtung nach Anspruch 8, **dadurch gekennzeichnet, dass** die Anschlussmittel (10) die Gestalt einer Muffe (11), in die ein Schaft (12) drehbar eingesetzt ist, der mit den Antriebsmitteln (3) verbunden und dazu bestimmt ist, die erste querlaufende Drehachse (B) zu definieren, und eines im Wesentlichen zur Muffe (11) rechtwinkligen Rohres (16) haben, das geeignet ist, die längslaufende Drehachse (L) zu definieren.

10. Einrichtung nach Anspruch 9, **dadurch gekennzeichnet, dass** sich von der Muffe (11) eine Zunge (13) erstreckt, die im Wesentlichen in Form eines Kreissegments in einer zur Achse der Muffe (11) perpendikularen vertikalen Ebene ausgebildet und geeignet ist, einen darunter befindlichen längslaufenden Nocken (7) zu belegen, um durch eine Winkeldrehung der Anschlussmittel (10) den Abwärtshub der Stützmittel (50) mit Rollen in eine abgesenkte Stellung zu steuern.

11. Einrichtung nach Anspruch 10, **dadurch gekennzeichnet, dass** der längslaufende Nocken (7) mindestens einen Abschnitt (7b) mit einem in der Vorschubrichtung (A) schräg abfallendem Profil ausbildet, das geeignet ist, die Winkeldrehung der Fördervorrichtungen (1) um die erste Drehachse (B) zu bedingen, um das Anheben des Auflageelements (40) der Tragmittel (30) und das gleichzeitige Absenken der Stützmittel (50) mit Rollen zu bewirken.

12. Einrichtung nach Anspruch 10, **dadurch gekennzeichnet, dass** die Zunge (13) mit einem Langloch (14) versehen ist, das gemäß einem zur Achse der Muffe (11) konzentrischen Kreisbogen ausgebildet und dazu bestimmt ist, von einem Zapfen (15) belegt zu werden, der sich seitlich von den Antriebsmitteln (3) erstreckt.

13. Einrichtung nach Anspruch 9, **dadurch gekennzeichnet, dass** sich oberhalb der Muffe (11) eine in einer zur längslaufenden Drehachse (L) rechtwinkligen Ebene in Form eines Kreissegments ausgebildete Schulter (17) erstreckt, die geeignet ist, als unterer Anschlag für das Auflageelement (40) zu dienen.

14. Einrichtung nach Anspruch 9, **dadurch gekennzeichnet, dass** mit dem Rohr (16) der Anschlussmittel (10) ein Schaft (21) drehbar verbunden ist, der von den verbindenden Mitteln (20) gebildet wird, wobei sich dieser Schaft (21) von einem Körper (23) erstreckt, der rückseitig ein weiteres Rohr (24) bildet, das geeignet ist, die zweite querlaufende Drehachse (C) zu definieren.

15. Einrichtung nach Anspruch 8, **dadurch gekennzeichnet, dass** die Tragmittel (30) aus einem im Wesentlichen kastenförmigen Körper (31) bestehen, der geeignet ist, die verbindenden Mittel (20) in seinem Innern aufzunehmen, und der oberhalb in einer gegenüber der Vorschubrichtung (A) vorgeschobenen Position das Auflageelement (40) ausbildet, wobei sich auf Höhe der zweiten querlaufenden Drehachse (C) jeweilige koaxiale röhrenförmige Elemente (33) von den Seiten des Körpers (31) erstrecken, auf die bestimmungsgemäß die Stützmittel (50) mit Rollen frei drehbar montiert sind.

16. Einrichtung nach Anspruch 15, **dadurch gekennzeichnet, dass** sich der untere Teil des Körpers (31) der Tragmittel (30) vorne zu einer Konsole (34) verlängert, die dazu bestimmt ist, in einer Phase einer Winkeldrehung der Tragmittel (30) um die zweite querlaufende Drehachse (C) auf Höhe einer Station zum Wiegen der Artikel (2) als Anschlag für die Anschlussmittel (10) zu dienen.

17. Einrichtung nach Anspruch 8, **dadurch gekennzeichnet, dass** sich von den Tragmitteln (30) Fortsätze (36, 38) nach unten erstrecken, die dazu geeignet sind, in einer Station zum Wiegen der Artikel (2) darunter befindliche Gleitschuhe (8) gleitend zu belegen, die geeignet sind, eine Winkeldrehung der Tragmittel (30) um die zweite querlaufende Drehachse (C) zu bedingen, um das Auflageelement (40) der Tragmittel (30) gegenüber den Anschlussmitteln (10) anzuheben.

18. Einrichtung nach Anspruch 8, **dadurch gekennzeichnet, dass** das Auflageelement (40) durch eine Art bogenförmigen Kamm definiert ist, um sich in die abgesenkte Stellung der Tragmittel (30) einzufügen, ohne mit den Stützmitteln (50) mit Rollen der gegenüber der Vorschubrichtung (A) vorgeschoben angeordneten benachbarten Fördervorrichtung (1) zu kollidieren.

19. Einrichtung nach Anspruch 8, **dadurch gekennzeichnet, dass** die Stützmittel (50) mit Rollen in darunter befindliche längslaufende Führungen (6) eingreifen, die geeignet sind, die Stützmittel (50) mit Rollen auf Höhe zumindest der Einlaufstation in Drehung zu versetzen.

20. Einrichtung nach Anspruch 19, **dadurch gekennzeichnet, dass** die längslaufenden Führungen (6) aus flexiblen Führungsmitteln (60) bestehen, die in geeigneter Weise in Vorschubrichtung (A) angetrieben werden, um die relative Geschwindigkeit der Stützmittel (50) mit Rollen gegenüber den Führungen (6) selbst zu verringern.

## Revendications

1. Méthode pour trier des articles dans des appareils comprenant une ligne de transport développée le long d'une direction essentiellement horizontale entre une station d'entrée (2) des articles à trier et une station de décharge, et pourvue de moyens de traction (3) d'une pluralité de dispositifs de transport (1) des articles (2), régulièrement espacés à des positions réciproquement adjacentes et propres à conduire les mêmes articles (2) à des stations opératives appropriées, **caractérisée en ce qu'**elle comprend les étapes de :
(a) alimenter les articles (2) à trier sur des moyens de soutien (50) à galets, portés en rotation libre par des moyens de support (30) de dispositifs de transport (1) respectifs positionnés à des positions adjacentes ;
(b) porter en rotation les moyens de soutien (50) à galets pour provoquer la rotation des articles (2) vers une station de détection visuelle des mêmes articles (2) ;
(c) opérer la descente des moyens de soutien (50) à galets jusqu'à une position abaissée à travers une rotation angulaire autour d'un premier axe de rotation (B) transversal aux moyens de traction (3), de façon à prédisposer les articles (2) individuels respectivement supportés par les moyens de soutien (50) à galets portés par les moyens de support (30) et par un élément de support (40) défini par les moyens de support (30) eux-mêmes, propre à coopérer avec les moyens de soutien (50) à galets pour former un groupe de manipulation d'un articles individuel (2) ;
(d) soulever l'élément de support (40) des moyens de support (30) au moyen d'une rotation angulaire opposée autour d'un second axe de rotation (C) transversal aux moyens de traction (3), de façon à provoquer la séparation des moyens de support (30) eux-mêmes des moyens de traction (3) au niveau d'une station de pesée des articles (2) ;
(e) renverser les moyens de support (30) autour d'un axe de rotation (L) essentiellement longitudinale à la ligne de transport, sur action contrastante de moyens élastiques (25), depuis une position de charge jusqu'à une position de décharge des articles (2), renversée vers l'extérieur sur la côté opposé des moyens de traction (3).

2. Méthode selon la revendication 1, **caractérisée en ce qu'**elle prévoir de stopper la rotation des moyens de soutien (50) à galets avant d'opérer la descente des moyens de soutien (50) à galets eux-mêmes vers la position abaissée, de façon à éviter toute action de frottement des articles individuels (2) conter l'élément de support (40) des moyens de support (30).

3. Méthode selon la revendication 1, **caractérisée en ce qu'**elle prévoit de porter en rotation les moyens de soutien (50) à galets par couplage avec des guides longitudinaux (6) mobiles selon la direction d'avancement (A), de façon à réduire la vitesse relative des moyens de soutien (50) à galets par rapport aux guides (6) eux-mêmes et par conséquent la vitesse de rotation des moyens de soutien (50) à galets dans le but de garantir la stabilité des articles (2).

4. Méthode selon la revendication 1, **caractérisée en ce qu'**elle prévoit d'opérer la descente des moyens de soutien (50) à galets jusqu'à la position abaissée par une rotation angulaire de moyens d'attache (10) des dispositifs de transport (1), rotatifs angulairement autour du premier axe de rotation (B), provoquée par le couplage avec une came longitudinale (7) située en dessous.

5. Méthode selon la revendication 1, **caractérisée en ce qu'**elle prévoit de soulever l'élément de support (40) des moyens de support (30) au niveau de la station de pesée des articles (2) au moyen d'une rotation angulaire des moyens de support (30) autour du second axe de rotation (C) transversal, dans une direction opposée à la rotation angulaire autour du premier axe de rotation (B) transversal, ladite rotation angulaire opposée étant provoquée par le couplage avec des patins (8) situés en dessous.

6. Méthode selon la revendication 5, **caractérisée en ce qu'**elle prévoit d'opérer la rotation angulaire des moyens de support (30) d'un angle (α) ayant une amplitude réduite, par exemple de 5 .

7. Méthode selon la revendication 1, **caractérisée en ce qu'**elle prévoit de renverser les moyens de support (30) dans la position de décharge des articles (2) au moyen du couplage sélectif avec une came de renversement (9) assujettie au contrôle de moyens de traitement de données pour traiter les mesures effectuées sur les articles (2) eux-mêmes.

8. Appareil pour trier des articles, du type comprenant une ligne de transport développée le long d'une direction essentiellement horizontale entre une station d'entrée des articles (2) à trier et une station de décharge, et pourvue de moyens de traction (3) d'une pluralité de dispositifs de transport (1) des articles (2), régulièrement espacés à des positions réciproquement adjacentes et propres à porter les articles (2) à des station opérationnelles appropriées, **caractérisé en ce que** chaque dispositif de transport (1) comprend des moyens d'attache (10) propres à être portés sur un côté des moyens de traction (3), angulairement rotatif autour d'un premier axe de rotation (B) transversal à la ligne de transport, et définissant un axe de rotation (L) essentiellement longitudinal à la ligne de transport ; des moyens intermédiaires (20) associés de façon rotative aux moyens d'attache (10) autour de l'axe de rotation (L) longitudinal et définissant un second axe de rotation (C) transversal à la ligne de transport, le second axe de rotation (C) étant positionné parallèle au premier axe de rotation (B) dans une position reculée par rapport à la direction d'avancement (A) ; des moyens de support (30) formant un élément de support (40) d'un article individuel (2), pivotés sur le second axe de rotation (C) transversal, de façon à être en rotation entre une position soulevée et une position abaissée, et montés de manière à osciller autour de l'axe de rotation (L) longitudinal sous l'action contrastante de moyens élastiques (25) entre une position de charge d'un article individuel (2) et une position de décharge renversée vers l'extérieur sur le côté opposé des moyens de traction (3) ; des moyens de soutien (50) à galets montés librement rotatifs autour du second axe de rotation (C) transversal, bilatéralement aux moyens de support (30)et propres à coopérer avec l'élément de support (40) des moyens de support (30) pour former un groupe de manipulation d'un article individuel (2).

9. Appareil selon la revendication 8, **caractérisé en ce que** les moyens d'attache (10) forment un manchon (11) dans lequel est insérée de façon rotative une tige (12) liée aux moyens de traction (3), destinée à définir le premier axe de rotation (B) transversal, et un tube (16) essentiellement orthogonal au manchon (11) qui est propre à définir l'axe de rotation (L) longitudinal.

10. Appareil selon la revendication 9, **caractérisé en ce que** du manchon (11) s'étend une languette (13) ayant une forme de secteur essentiellement circulaire, sur un plan vertical perpendiculaire à l'axe du manchon (11), et propre à engager une came (7) longitudinale située en dessous pour contrôler la descente des moyens de soutien (50) à galets dans la position abaissée au moyen d'une rotation angulaire des moyens d'attache (10).

11. Appareil selon la revendication 10, **caractérisé en ce que** la came (7) longitudinale forme une partie (7b) au moins avec un profil incliné en descente selon la direction d'avancement (A), propre à provoquer la rotation angulaire des dispositifs de transport (1) autour du premier axe de rotation (B) pour provoquer le soulèvement de l'élément de support (40) des moyens de support (30) et l'abaissement simultané des moyens de soutien (50) à galets.

12. Appareil selon la revendication 10, **caractérisé en ce que** sur la languette (13) est pratiquée une fente (14) en forme d'arc de cercle concentrique à l'axe du manchon (11) et destinée à être engagée par un pivot (15) qui s'étend latéralement aux moyens de traction (3).

13. Appareil selon la revendication 9, **caractérisé en ce qu'**au dessus du manchon (11) s'étend un épaulement (17) en forme d'arc de cercle sur un plan orthogonal audit axe de rotation (L) longitudinal, propre à servir de butée inférieure pour l'élément de support (40).

14. Appareil selon la revendication 9, **caractérisé en ce qu'**au tube (16) des moyens d'attache (10) est associé de façon rotative une tige (21) formé par les moyens intermédiaires (20), ladite tige s'étendant (21) d'un corps (23) formant vers l'arrière un tube (24) ultérieur propre à définir le second axe de rotation (C) transversal.

15. Appareil selon la revendication 8, **caractérisé en ce que** les moyens de support (30) sont constitués d'un corps (31) en forme essentiellement de boîte propre à recevoir en son intérieur les moyens intermédiaires (20) et formant supérieurement l'élément de support (40), à une position avancée par rapport à la direction d'avancement (A), dans lequel depuis les deux côtés du corps (31) sur le second axe de rotation (C) transversal s'étendent bilatéralement vers l'extérieur de respectifs éléments tubulaires (33), sur lesquels les moyens de soutien (50) à galets sont destinés à être montés en rotation libre.

16. Appareil selon la revendication 15, **caractérisé en ce qu'**une portion inférieure du corps (31) des moyens de support (30) se prolonge frontalement avec une tablette destinée à servir de butée pour les moyens d'attache (10) durant une phase de rotation des moyens de support (30) autour du second axe de rotation (C) transversal au niveau d'une station de pesée des articles (2).

17. Appareil selon la revendication 8, **caractérisé en ce que** depuis les moyens de support (30) s'étendent vers le bas des appendices (36, 38) propres à engager de façon coulissante au niveau d'une station de pesée des articles (2) des patins (8) coulissants situés en dessous, propres à provoquer une rotation angulaire des mêmes moyens de support (30) autour du second axe de rotation (C) transversal pour soulever l'élément de support (40) des moyens de support (30) par rapport aux moyens d'attache (10).

18. Appareil selon la revendication 8, **caractérisé en ce que** l'élément de support (40) est défini par une sorte de peigne en arc de cercle, de façon à s'insérer sans interférence entre les moyens de soutien (50) à galets du dispositif de transport (1) adjacent en position frontale par rapport à la direction d'avancement (A) dans la position abaissée des moyens de support (30).

19. Appareil selon la revendication 8, **caractérisé en ce que** les moyens de soutien (50) à galets engagent des guides (6) longitudinaux situés en dessous, propres à mettre en roulement les mêmes moyens de soutien (50) à galets au niveau au moins de la station d'entrée.

20. Appareil selon la revendication 8, **caractérisé en ce que** les guides (6) longitudinaux sont constitués d'éléments de guidage (60) flexibles convenablement motorisés selon la direction d'avancement (A) de façon à réduire la vitesse relative des moyens de soutien (50) à galets par rapport aux guides (6).
